# FASCICULE DE BREVET EUROPEEN

(11) **EP 0 919 171 B1**
(45) Date de publication et mention de la délivrance du brevet: **29.01.2003**
(21) Numéro de dépôt: 98420219.2
(22) Date de dépôt: 30.11.1998
(51) Int. Cl.: A47J 31/06

(54) **Porte-filtre pour cafetière du type expresso**
Filterträger für eine Espresso-Kaffeemaschine
Filter carrier for an expresso type coffee machine

(30) Priorité: 01.12.1997 FR 9715347
(43) Date de publication de la demande: 02.06.1999
(73) Titulaire: SEB S.A., 69130 Ecully (FR)
(72) Inventeur: Pessin, Olivier, 69340 Francheville (FR); Ligneau, Vincent, 69780 Mions (FR)

(56) Documents cités:
- EP-A- 0 459 323
- EP-A- 0 682 902
- FR-A- 2 636 828
- FR-A- 2 744 002

## Description

La présente invention concerne un porte-filtre pour cafetière du type expresso.

On sait que le porte-filtre d'une cafetière du type ci-dessus comprend un récipient destiné à recevoir la mouture de café dont le fond comporte au moins une ouverture d'écoulement du café boisson.

Dans ce porte-filtre, de l'eau chaude est introduite sous pression.

En traversant la mouture de café, l'eau chaude se charge des extraits de café et des arômes et sort de l'ouverture du fond sous la forme de café boisson crémeux.

La crème du café est obtenue : soit au moyen de dispositifs dissociant la filtration de la montée en pression dans le porte-filtre et la création de la crème, soit au moyen de dispositifs associant la filtration à la montée en pression dans le porte-filtre et la création de la crème.

Les dispositifs du premier type ci-dessus sont décrits dans les brevets européen 0 459 323, français 2 636 828 et allemand 3 035 157.

Dans ces réalisations, le fond du porte-filtre comprend une paroi filtrante.

Dans le dispositif décrit dans le brevet européen 0 459 323, une lame métallique flexible obture au repos l'ouverture d'écoulement du café. A partir d'une certaine pression, la lame dégage l'ouverture et le flux de café boisson s'écrase contre une cloison agencée autour de la lame flexible.

Dans le dispositif décrit dans le brevet français 2 636 828, il est prévu un disque élastique qui se déforme au-delà d'une certaine pression.

Dans le dispositif décrit dans le brevet allemand 30 35 157, le café boisson s'écoule par un clapet à bille ou cône monté sur un ressort.

Les dispositifs du second type ci-dessus sont décrits dans les brevets français 2 676 658 et 2 655 529.

Dans ces réalisations, le récipient du porte-filtre ne comprend pas de paroi filtrante.

La filtration et la crème sont obtenues par une série de lamelles élastiques (brevet français 2 676 658) ou par un orifice ménagé dans une pièce élastique dont la section de passage varie en fonction de la pression (brevet français 2 655 529).

Le but de la présente invention est d'améliorer la qualité du café produit dans une cafetière du type expresso en créant un porte-filtre comportant un dispositif permettant :
- d'obtenir la pression nécessaire afin d'extraire de la mouture de café tout l'arôme du café ;
- d'obtenir une crème de café abondante, dense, persistante et colorée.

Un autre but de la présente invention est de proposer un porte-filtre de construction simple, facile à assembler, qui permet de réduire les coûts de fabrication du dispositif objet de l'invention et comportant des pièces en matière plastique moulées, faciles à réaliser.

L'invention vise ainsi un porte-filtre pour cafetière du type expresso comprenant un récipient destiné à recevoir la mouture de café dont le fond comporte au moins une ouverture pour l'écoulement du café au-dessus de laquelle s'étend une paroi filtrante pour retenir la mouture de café, voir FR-A-2 744 002.

Suivant l'invention, ce porte-filtre est caractérisé en ce que la paroi filtrante est séparée de ladite ouverture du fond par un organe en matière élastique comportant sur son pourtour une lèvre élastiquement déformable par compression, sous l'effet de la pression, entre une première position radiale dans laquelle cette lèvre empêche le passage du café par ladite ouverture du fond du récipient et une deuxième position radiale dans laquelle cette lèvre libère l'ouverture.

La paroi filtrante combinée avec le passage du café boisson par l'ouverture créée par la déformation de la lèvre élastique sous l'effet d'une certaine pression permet d'obtenir à la fois :
- une pression suffisante pour extraire tout l'arôme de la mouture de café et ;
- une crème de café abondante, dense, persistante et colorée.

Selon une version préférée de l'invention, ledit organe en matière élastique a la forme générale d'un disque, la lèvre s'étendant sur tout le pourtour de ce disque et définissant entre elle et une paroi latérale du disque un espace annulaire.

De préférence également, la paroi filtrante et ledit organe en matière élastique sont fixés au fond du récipient par une vis centrale.

Avantageusement, le fond du récipient comporte deux ouvertures diamétralement opposées pour l'écoulement du café.

Selon une particularité de l'invention, le fond du récipient présente une surface sensiblement cylindrique contre laquelle prend appui élastiquement la lèvre dudit organe, en l'absence de pression à l'intérieur du récipient.

D'autres particularités et avantages de l'invention apparaîtront encore dans la description ci-après.

Aux dessins annexés donnés à titre d'exemples non limitatifs :
- la figure 1 est une vue en coupe axiale d'un porte-filtre conforme à l'invention ;
- la figure 2 est une vue de dessus du support de la paroi filtrante du porte-filtre selon la figure 1 ;
- la figure 3 est une vue analogue à la figure 1, concernant une variante de l'invention ;
- les figures 4 et 5 sont des vues en coupe partielle montrant deux autres variantes de l'invention.

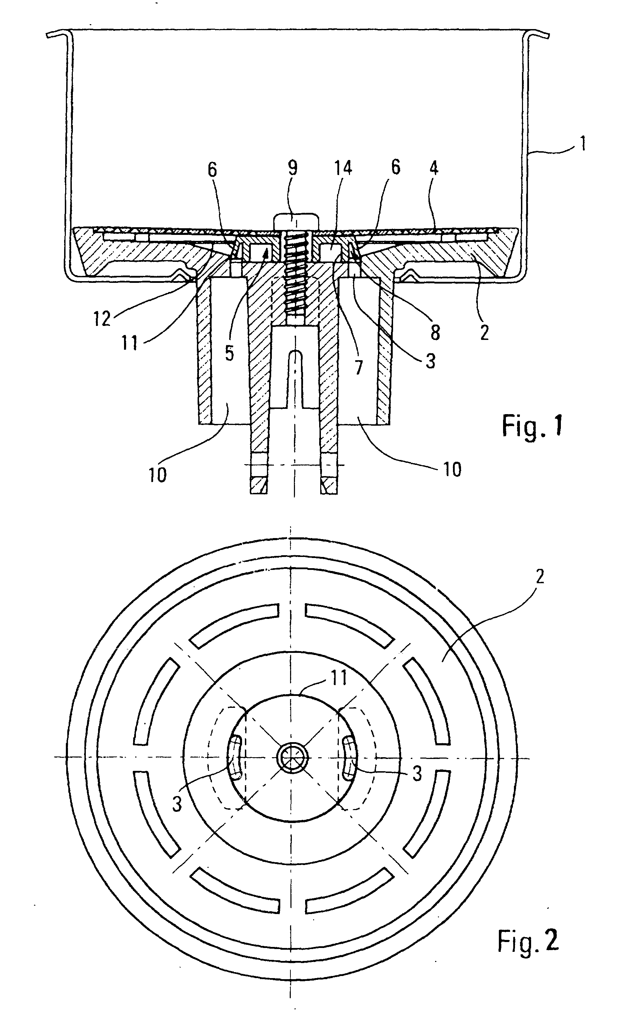

Dans la réalisation représentée sur la figure 1, le porte-filtre pour cafetière du type expresso, comprend un récipient 1 destiné à recevoir la mouture de café dont le fond porte un support de filtre 2 comportant au moins une ouverture 3 pour l'écoulement du café.

Au-dessus du support de filtre 2 s'étend une paroi filtrante 4 en forme de disque pour retenir la mouture de café.

Conformément à l'invention, la paroi filtrante 4 est séparée du support de filtre 2 par un organe 5 en matière élastique comportant sur son pourtour une lèvre 6 élastiquement déformable, sous l'effet de la pression, entre une position dans laquelle cette lèvre 6 empêche le passage du café par l'ouverture 3 du support de filtre 2 et une position dans laquelle cette lèvre 6 libère l'ouverture 3.

Dans l'exemple représenté, l'organe 5 en matière élastique a la forme générale d'un disque. La lèvre 6 s'étend sur tout le pourtour de ce disque et définit entre elle et une paroi latérale 7 du disque 5 un espace annulaire 8 ouvert vers l'ouverture 3.

Comme montré par la figure 1, la paroi filtrante 4 et l'organe 5 en matière élastique sont fixés au support de filtre 2 par une vis centrale 9.

Dans l'exemple montré par la figure 1, le support de filtre 2 comporte deux ouvertures 3 diamétralement opposées pour l'écoulement du café. Ces ouvertures 3 sont oblongues, légèrement arquées et débouchent vers le bas par des tubulures 10.

Par ailleurs, la surface du support de filtre 2 en regard du disque filtrant 4 présente une surface sensiblement cylindrique 11 contre laquelle prend appui élastiquement la lèvre 6 de l'organe 5, en l'absence de pression à l'intérieur du récipient.

La surface 11 ci-dessus s'étend sensiblement dans le prolongement du bord extérieur des ouvertures 3 d'écoulement du café.

On voit également sur la figure 1 que l'organe 5 en matière élastique est entouré par un espace vide 12 compris entre le disque filtrant 4 et le support 2.

Par ailleurs, la surface du support de filtre 2 en regard du disque filtrant 4 est légèrement évasée vers le haut.

De plus, la surface extérieure de la lèvre 6 a une forme tronconique évasée vers le support de filtre 2.

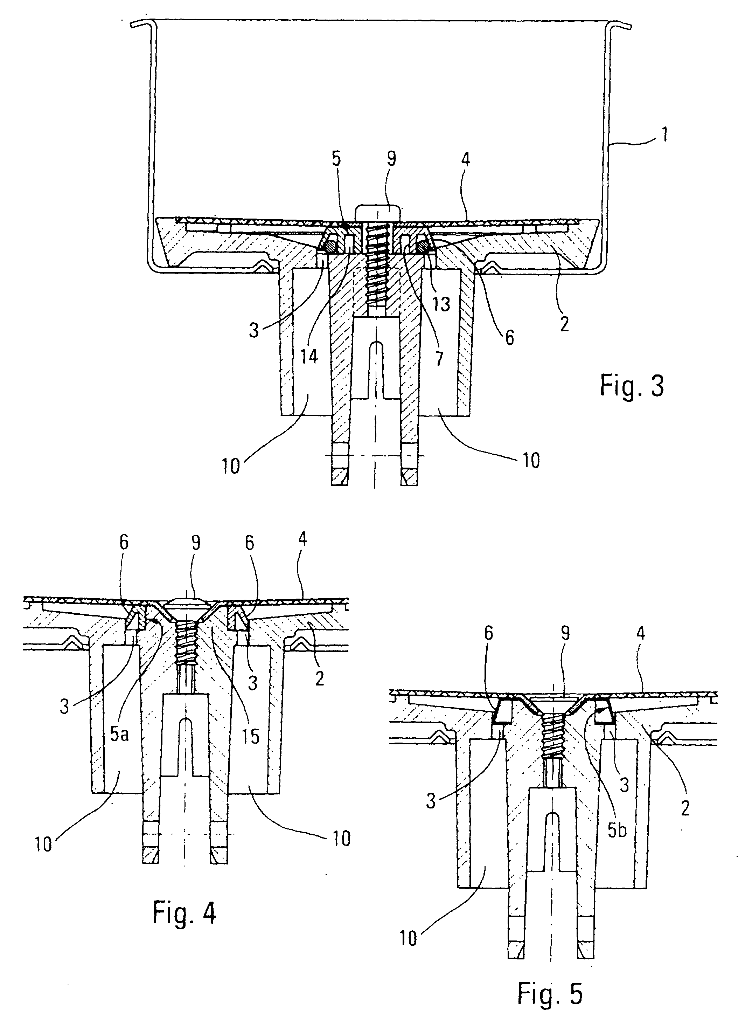

Dans la variante représentée sur la figure 3, entre la lèvre 6 et ladite paroi latérale 7 de l'organe élastique 5 est inséré un joint torique 13 en matière élastique qui permet de contrôler la déformation élastique de la lèvre 6.

Selon la même variante, le joint torique 13 peut être remplacé par un ressort métallique ou par tout autre organe élastique, connu dans l'état de la technique, qui permet le contrôle de la déformation élastique de la lèvre 6.

Dans l'exemple des figures 1 et 3, l'organe 5 en matière élastique comporte entre la paroi latérale 7 et son centre un évidemment annulaire 14 ouvert vers le support de filtre 2, afin d'alléger l'organe 5.

Dans les exemples des figures 1, 2 et 4 l'organe 5, 5a est en matière synthétique élastique.

Dans le cas de la figure 4, l'organe 5a est constitué par une bague munie d'une lèvre périphérique 6.

Cette bague est montée sur une protubérance 15 ménagée au centre du support de filtre 2.

Dans le cas de la figure 5, l'organe élastique 5b est en métal élastique, tel que l'acier inoxydable.

On va maintenant expliquer en référence à la figure 1, le fonctionnement du dispositif que l'on vient de décrire.

Lors du fonctionnement de la cafetière expresso, l'eau chaude traverse la mouture de café reposant sur le disque filtrant 4 et se charge des extraits et arôme de café.

Le disque filtrant 4 retient la mouture de café et laisse passer le café boisson. Ce café boisson remplit l'espace 12 entourant l'organe élastique 5.

La lèvre 6 de l'organe 5 empêche, de préférence d'une manière totalement étanche, l'écoulement du café par les ouvertures 3.

Lors du fonctionnement de la cafetière, la pression hydraulique monte progressivement dans l'espace 12 ci-dessus. Lorsque cette pression atteint environ 6 fois celle de la pression atmosphérique, la lèvre 6 de l'organe 5 se déforme radialement par compression et laisse passer le café boisson par les ouvertures 3 par lesquelles il s'écoule vers le bas en formant deux jets laminaires verticaux dans une direction sensiblement parallèle à l'axe de l'une ou l'autre desdites ouvertures 3.

Au passage, le café boisson est laminé entre la lèvre 6 et la surface sensiblement cylindrique 11. Ce laminage créé une brusque dépression et une émulsion qui engendre une crème abondante, onctueuse et persistante, très appréciée par les consommateurs.

Bien entendu, l'invention n'est pas limitée aux exemples de réalisation que l'on vient de décrire et on peut apporter à ceux-ci de nombreuses modifications sans sortir du cadre de l'invention.

## Revendications

1. Porte-filtre pour cafetière du type expresso comprenant un récipient (1) destiné à recevoir la mouture de café dont le fond (2) comporte au moins une ouverture (3) pour l'écoulement du café au-dessus de laquelle s'étend une paroi filtrante (4) pour retenir la mouture de café, **caractérisé en ce que** la paroi filtrante (4) est séparée de ladite ouverture du fond (3) par un organe (5) en matière élastique comportant sur son pourtour une lèvre (6) élastiquement déformable par compression, sous l'effet de la pression, entre une première position radiale dans laquelle cette lèvre (6) empêche le passage du café par ladite ouverture (3) du fond (2) du récipient (1) et une deuxième position radiale dans laquelle cette lèvre libère l'ouverture (3).

2. Porte-filtre conforme à la revendication 1 **caractérisé en ce que** ledit organe (5) en matière élastique a la forme générale d'un disque, la lèvre (6) s'étendant sur tout le pourtour de ce disque et définissant entre elle et une paroi latérale (7) du disque un espace annulaire (8).

3. Porte-filtre conforme à l'une des revendications 1 ou 2, **caractérisé en ce que** la paroi filtrante (4) et ledit organe (5) en matière élastique sont fixés au fond (2) du récipient par une vis centrale (9).

4. Porte-filtre conforme à l'une des revendications 1 à 3, **caractérisé en ce que** le fond (2) du récipient (1) comporte deux ouvertures (3) diamétralement opposées pour l'écoulement du café.

5. Porte-filtre conforme à l'une des revendications 1 à 4, **caractérisé en ce que** le fond (2) du récipient (1) présente une surface sensiblement cylindrique (11) contre laquelle prend appui élastiquement la lèvre dudit organe (5), en l'absence de pression à l'intérieur du récipient (1).

6. Porte-filtre conforme à la revendication 5, **caractérisé en ce que** la surface (11) s'étend sensiblement dans le prolongement du bord extérieur de la ou des ouvertures (3) d'écoulement du café.

7. Porte-filtre conforme à l'une des revendications 1 à 6, **caractérisé en ce que** ledit organe (5) en matière élastique est entouré par un espace vide (12) compris entre la paroi filtrante (4) et le fond (2) du récipient.

8. Porte-filtre conforme à l'une des revendications 1 à 7, **caractérisé en ce que** le fond (2) du récipient est légèrement évasé vers le haut.

9. Porte-filtre conforme à l'une des revendications 2 à 8, **caractérisé en ce que** la surface extérieure de la lèvre (6) a une forme tronconique évasée vers le fond (2) du récipient (1).

10. Porte-filtre conforme à l'une des revendications 2 à 9, **caractérisé en ce que** l'espace annulaire (8) compris entre la lèvre (6) et ladite paroi latérale (7) est ouvert vers la ou les ouvertures (3) d'écoulement du café.

11. Porte-filtre conforme à l'une des revendications 2 à 9, **caractérisé en ce qu'**entre la lèvre (6) et ladite paroi latérale (7) est inséré un joint torique (13) en matière élastique.

12. Porte-filtre conforme à l'une des revendications 2 à 11, **caractérisé en ce que** ledit organe (5) en matière élastique comporte entre ladite paroi latérale (7) et son centre, un évidemment annulaire (14) ouvert vers le fond (2) du récipient.

13. Porte-filtre conforme à l'une des revendications 1 à 12, **caractérisé en ce que** ledit organe (5) est en matière synthétique élastique.

14. Porte-filtre conforme à l'une des revendications 1 à 12, **caractérisé en ce que** ledit organe (5b) est en métal élastique.

## Claims

1. A filter carrier for an expresso type coffee maker, the carrier comprising a receptacle (1) for receiving ground coffee and having a bottom (2) which includes at least one coffee outflow opening (3) above which there extends a filtering wall (4) for retaining the ground coffee, the filter carrier being **characterized in that** the filtering wall (4) is separated from said opening in the bottom (3) by a member (5) of elastic material having at its periphery a lip (6) that is elastically deformable in compression under the effect of pressure between a first radial position in which said lip (6) prevents coffee from passing through said opening (3) in the bottom (2) of the receptacle (1) and a second radial position in which said lip releases the opening (3).

2. A filter carrier according to claim 1, **characterized in that** said member (5) of elastic material is generally disk-shaped, the lip (6) extending over the entire periphery of said disk and defining an annular space (8) between the disk and a side wall (7) of the disk.

3. A filter carrier according to claim 1 or claim 2, **characterized in that** the filtering wall (4) and said member (5) of the elastic material are fixed to the bottom (2) of the receptacle by a central screw (9).

4. A filter carrier according to any one of claims 1 to 3, **characterized in that** the bottom (2) of the receptacle (1) has two diametrically opposite coffee outflow openings (3).

5. A filter carrier according to any one of claims 1 to 4, **characterized in that** the bottom (2) of the receptacle (1) presents a substantially cylindrical surface (11) against which the lip of said member (5) bears elastically in the absence of pressure inside the receptacle (1).

6. A filter carrier according to claim 5, **characterized in that** the surface (11) extends substantially as an extension to the outer edge of the coffee outflow opening(s) (3).

7. A filter carrier according to any one of claims 1 to 6, **characterized in that** said member (5) of elastic material is surrounded by an empty space (12) extending between the filtering wall (4) and the bottom (2) of the receptacle;

8. A filter carrier according to any one of claims 1 to 7, **characterized in that** the bottom (2) of the receptacle flares slightly in an upward direction.

9. A filter carrier according to any one of claims 2 to 8, **characterized in that** the outside surface of the lip (6) is frustoconical in shape, flaring towards the bottom (2) of the receptacle (1).

10. A filter carrier according to any one of claims 2 to 9, **characterized in that** the annular space (8) between the lip (6) and said side wall (7) is open towards the coffee outflow opening(s) (3).

11. A filter carrier according to any one of claims 2 to 9, **characterized in that** an O-ring (13) of elastic material is inserted between the lip (6) and said side wall (7).

12. A filter carrier according to any one of claims 2 to 11, **characterized in that** said member (5) of elastic material has an annular opening (14) between said side wall (7) and its center, the opening being opened towards the bottom (2) of the receptacle.

13. A filter carrier according to any one of claims 1 to 12, **characterized in that** said member (5) is made of elastic synthetic material.

14. A filter carrier according to any one of claims 1 to 12, **characterized in that** said member (5b) is made of elastic metal.

## Patentansprüche

1. Filterträger für eine Kaffeemaschine vom Typ Espresso, mit einem Behälter (1) zur Aufnahme des Kaffeemahlguts, dessen Boden (2) mindestens eine Öffnung (3) für das Abfließen des Kaffees aufweist, oberhalb derer sich eine filtrierende Wand (4) erstreckt, um das Mahlgut festzuhalten, **dadurch gekennzeichnet, daß** diese filtrierende Wand (4) von der Bodenöffnung (3) durch ein aus elastischem Material bestehende Organ (5) getrennt ist, das an seinem Umfang eine Lippe umfaßt, die unter der Wirkung des Drucks zwischen einer ersten radialen Stellung, in der die Lippe (6) das Abfließen des Kaffees über die Öffnung (3) des Bodens (2) des Behälters (1) verhindert, und einer zweiten radialen Stellung, in der die Lippe die Öffnung (3) freigibt, elastisch verformbar ist.

2. Filterträger nach Anspruch 1, **dadurch gekennzeichnet, daß** das aus elastischem Material bestehende Organ (5) allgemein scheibenfönnig ist, wobei sich die Lippe (6) über den ganzen Umfang der Scheibe erstreckt und zwischen sich und der Seitenwand (7) der Scheibe einen Ringraum (8) bildet.

3. Filterträger nach Anspruch 1 oder 2, **dadurch gekennzeichnet, daß** die filtrierende Wand (4) und das Organ (5) am Boden (2) des Behälters (1) mittels einer mittigen Schraube (10) befestigt sind.

4. Filterträger nach einem der Ansprüche 1 bis 3, **dadurch gekennzeichnet, daß** für das Abfließen des Kaffees der Boden (2) des Behälters (1) zwei diametral entgegengesetzten Öffnungen (3) aufweist.

5. Filterträger nach einem der Ansprüche 1 bis 4, **dadurch gekennzeichnet, daß** der Boden (2) des Behälters (1) eine im wesentlichen zylindrische Fläche (11) aufweist, an welcher die Lippe des Organs (5) anliegt, wenn innerhalb des Behälters (1) kein Druck herrscht.

6. Filterträger nach Anspruch 5, **dadurch gekennzeichnet, daß** die Fläche (11) sich im wesentlichen in Verlängerung des Außenrands der Öffnung oder der Öffnungen (3) zum Abfließen des Kaffees erstreckt.

7. Filterträger nach einem der Ansprüche 1 bis 6, **dadurch gekennzeichnet, daß** das Organ (5) aus elastischem Material von einem Freiraum (12) umgeben ist, der zwischen der filtrierenden Wand (4) und dem Boden (2) des Behälters liegt.

8. Filterträger nach einem der Ansprüche 1 bis 7, **dadurch gekennzeichnet, daß** der Boden (2) des Behälters leicht nach oben erweitert ist.

9. Filterträger nach einem der Ansprüche 2 bis 8, **dadurch gekennzeichnet, daß** die Außenfläche der Lippe (6) sich zum Boden (2) des Behälters (1) kegelstumpfförmig erweitert.

10. Filterträger nach einem der Ansprüche 2 bis 9, **dadurch gekennzeichnet, daß** der Ringraum (8) zwischen der Lippe (6) und der Seitenwand (7) zu der Öffnung oder den Öffnungen zum Abfließen des Kaffees offen ist.

11. Filterträger nach einem der Ansprüche 2 bis 9, **dadurch gekennzeichnet, daß** ein O-Ring (13) aus elastischem Material zwischen der Lippe (6) und der Seitenwand (7) eingesetzt ist.

12. Filterträger nach einem der Ansprüche 2 bis 11, **dadurch gekennzeichnet, daß** das Organ (5) aus elastischem Material zwischen der Seitenwand (7) und seiner Mitte eine ringförmige Aussparung (14) aufweist, die zum Boden (2) des Behälters offen ist.

13. Filterträger nach einem der Ansprüche 1 bis 12, **dadurch gekennzeichnet, daß** das Organ (5) aus elastischem Kunststorf besteht.

14. Filterträger nach einem der Ansprüche 1 bis 12, **dadurch gekennzeichnet, daß** das Organ (5b) aus elastischem Metall besteht.
